# EUROPÄISCHE PATENTSCHRIFT

(11) **EP 2 655 141 B1**
(45) Veröffentlichungstag und Bekanntmachung des Hinweises auf die Patenterteilung: **07.01.2015**
(21) Anmeldenummer: 11784489.4
(22) Anmeldetag: 17.11.2011
(51) Int. Cl.: B60S 1/34

(54) **WISCHARM, INSBESONDERE FÜR EINE SCHEIBENWISCHVORRICHTUNG EINES KRAFTFAHRZEUGS**
WIPER ARM, IN PARTICULAR FOR A WINDOW WIPER DEVICE OF A MOTOR VEHICLE
BRAS D'ESSUIE-GLACE, EN PARTICULIER POUR UN DISPOSITIF D'ESSUIE-GLACE D'UN VÉHICULE AUTOMOBILE

(30) Priorität: 23.12.2010 DE 102010064009
(43) Veröffentlichungstag der Anmeldung: 30.10.2013
(73) Patentinhaber: Robert Bosch GmbH, 70442 Stuttgart (DE)
(72) Erfinder: GOELLER, Alexander, 72270 Baiersbronn (DE); WOLFGARTEN, Sven, 77815 Buehl (DE); RAPP, Harald, 77815 Buehl (DE); KRUSE, Michael, 77815 Buehl (DE)
(86) Internationale Anmeldenummer: PCT/EP2011/070310
(87) Internationale Veröffentlichungsnummer: WO 2012/084358

(56) Entgegenhaltungen:
- DE-A1- 10 126 258
- DE-A1- 10 228 349
- DE-A1-102005 008 635
- DE-A1-102005 050 773
- US-A- 4 170 804
- US-A1- 2002 144 373
- US-A1- 2008 313 840

## Beschreibung

Die Erfindung betrifft einen Wischarm, insbesondere für eine Scheibenwischvorrichtung, gemäß dem Oberbegriff des Patentanspruchs 1.

Wischarme dieser Art sind zahlreich bekennt. Sie weisen ein Befestigungsteil auf, an welchem ein Gelenkteil drehbeweglich über ein Wischarmgelenk angebracht ist. Am anderen Ende des Gelenkteils ist das Wischerblatt befestigt.

Derartige Wischerarme sind in der DE 101 26 258 A1 oder in der DE 102 28 349 A1 beschrieben. Der dort beschriebene Wischarm weist an seinem Befestigungsteil eine u-förmige Lageröffnung zur Aufnahme eines am Gelenkteil eingerichteten Gelenkbolzens auf.

Auch sind Konstruktionen bekannt, bei denen im Gelenkteil eine u-förmige Lageröffnung eingerichtet ist und das Befestigungsteil über einen Gelenkbolzen, der in der u-förmigen Lageröffnung geführt ist, verfügt.

In der Regel sind das Gelenkteil und das Befestigungsteil über ein Federelement verspannt, wodurch der Gelenkbolzen in einer Arbeitsposition in die u-förmige Lageröffnung gezogen und gleichzeitig ein ausreichender Anpressdruck des Wischerblatts auf die Fahrzeugscheibe erzeugt wird. In der Arbeitsposition des Wischarms liegt das Wischerblatt auf der Fahrzeugscheibe auf.

Das Befestigungsteil ist zudem mit einer Wischerwelle, verbunden und überträgt in der Arbeitsposition die Pendelbewegung der Wischerwelle über das Gelenkteil auf das Wischerblatt.

Um beispielsweise das Wischerblatt austauschen zu können, können derartige Wischarme von der Fahrzeugscheibe weggeklappt werden. Dies geschieht generell durch manuelles Wegziehen des Wischarms von der Fahrzeugscheibe. Hierzu wird das Gelenkteil um die Wischarmgelenkachse gegenüber dem Befestigungsteil in eine Serviceposition geschwenkt. Zum Erreichen der Serviceposition verfügt je nach Ausführungsform entweder das Gelenkteil oder das Befestigungsteil über einen oder mehrere Endanschläge, mit welchen die Schwenkbewegung des Gelenkteils gegenüber dem Befestigungsteil begrenzt wird.

Nachteilig an den bekannten Systemen ist, dass das Wischarmgelenk nur in Grenzen gegenüber den auf den Wischarm einwirkenden Kräften belastbar ist. Bei zu hohen Krafteinwirkungen auf das Wischarmgelenk, den sogenannten Misuse-Kräften, kann der Wischarm oder das Gelenk beschädigt werden. Wird beispielsweise das Gelenkteil beim Abklappen über den Anschlag gezogen, kann in Folge der übermäßigen Krafteinwirkung einer der Schenkel der u-förmigen Lageröffnung brechen oder die Feder des Federelementes überdehnt werden. In letztem Fall besteht dann zudem die Gefahr, dass der Wischarm demontiert wird, indem das Gelenkteil aus dem Lager gezogen wird.

Aufgabe der Erfindung ist es daher, einen Wischarm anzugeben, der eine deutlich gesteigerte Toleranz gegenüber Misuse-Kräften aufweist, ohne dass der Materialeinsatz am Gelenkteil erhöht werden muss.

Gelöst wird die Aufgabe mit einem Wischerarm, insbesondere für eine Scheibenwischvorrichtung eines Kraftfahrzeugs, mit einem Gelenkteil, das an einem Ende mit einem Befestigungsteil drehbeweglich verbunden ist, und mit wenigstens einem zwischen dem Gelenkteil und dem Befestigungselement wirkenden Federelement, wobei das Gelenkteil gegenüber dem Befestigungsteil aus einer Arbeitsposition in eine Serviceposition und umgekehrt verschwenkbar ist, wobei das Gelenkteil ein im Wesentlichen umgekehrtes U-Profil aufweist und aus einem Rücken und zwei Seitenwangen besteht und das Befestigungsteil zumindest teilweise umgreift und das Befestigungsteil wenigstens einen Gelenkbolzen aufweist. In mindestens einer Seitenwange des Gelenkteils ist eine Lageröffnung zur Aufnahme des Gelenkbolzens eingerichtet. Mittels der Federkraft des Federelements ist der Gelenkbolzen in einem Lagerbereich der Lageröffnung gesichert. Die Lageröffnung ist im Wesentlichen U-förmig ausgebildet. Der erfindungsgemäße Wischarm zeichnet sich dadurch aus, dass die Lageröffnung im unteren Schenkel des Lagerbereichs eine nach außen weisende Ausnehmung aufweist.

Die in einem Wischarm wirkenden Kraftlinien verlaufen im Betrieb (Arbeitsposition) in anderen Richtungen als in der Abklappposition (Serviceposition). Durch Nutzung der unterschiedlichen Kraftkennlinien in den genannten Lastfällen an einem Wischarm ist es durch den erfindungsgemäßen Wischarm möglich, die maximale Belastbarkeit gegenüber Misuse-Kräften signifikant zu erhöhen, ohne mehr Bauraum zu benötigen, einen erhöhten Materialaufwand zu betreiben oder höherfestere Materialien einzusetzen. Vorteilhaft ist auch, dass nur das Gelenkteil konstruktiv verändert ist, das Befestigungsteil jedoch unverändert bleibt.

Das Gelenkteil ist vorzugsweise aus Kunststoff gefertigt. Alternativ kann das Gelenkteil auch aus anderen Materialien, vorzugsweise aus Zink oder Aluminium, hergestellt sein.

Die beim Verschwenken des Gelenkteils aus der Arbeitsposition in die Serviceposition auf das Wischarmgelenk wirkenden Kräfte werden beim erfindungsgemäßen Wischarm genutzt, um den Gelenkbolzen in die im Lagerbereich der Lageröffnung eingerichtete Ausnehmung zu drücken. Hierdurch verändern sich die Kraftlinien im Wischarm sowie die auf das Wischarmgelenk wirkenden Kräfte. In der Arbeitsposition befindet sich der Gelenkbolzen im Lagerbereich außerhalb der Ausnehmung und hat mit dieser keinen Kontakt.

Vorteilhaft am erfindungsgemäßen Wischarm ist, dass die maximal zulässige Misuse-Kraft durch die Einrichtung der im unteren Schenkel des Lagerbereichs befindlichen, nach außen weisende Ausnehmung um > 40% gegenüber den bisher maximal zulässigen Misuse-Kräften bei Wischarmen gemäß des Oberbegriffs des Patentanspruchs 1 gesteigert wird. Die vom Wischarm maximal tolerierte Misuse-Kraft steigt zudem mit der Tiefe der Ausnehmung.

Die im Wesentlichen u-förmige Lageröffnung ist vorzugsweise ausgehend von der Stirnseite des gelenkseitigen Endes des Gelenkteils eingerichtet und erstreckt sich in Richtung des wischblattseitigen Endes des Gelenkteils unter Ausbildung zweier Schenkel, die die im Wesentlichen u-förmige Lageröffnung begrenzen.

Als Lagerbereich ist der innenliegende Endbereich der im Wesentlichen u-förmigen Lageröffnung bezeichnet. Der Gelenkbolzen wird durch die Federkraft des Federelementes in diesen Bereich der Lageröffnung gezogen und dort gesichert gehalten. Dabei ist der Lagerbereich vorzugsweise derart ausgebildet, dass er den Gelenkbolzen vorzugsweise in einem Umfangsbereich von 180° oder kleiner umfasst.

Dieser Lagerbereich weist zusätzlich die im unteren Schenkel eingerichtete und nach außen weisende Ausnehmung auf, in der der Gelenkbolzen zumindest mit einem Teilumfangsbereich einführbar ist. Die Ausnehmung ist vorzugsweise eine mindestens teilkreisförmige oder mindestens teilovalförmige Materialaussparung. Die Tiefe und/oder Form der Aussparung kann je nach Ausführungsform variieren. So kann die Ausnehmung selbst u-förmiger Gestalt sein.

Eine vorteilhafte Ausführungsform sieht vor, dass der Gelenkbolzen durch Ausführen einer, vorzugsweise manuell geführten, Schwenkbewegung aus der Arbeitsposition in die Serviceposition in der Ausnehmung arretierbar ist. Dies kann durch vorzugsweise mindestens ein in oder an der Ausnehmung eingerichtetes Arretierungsmittel, beispielsweise durch eine Einrastnase, erreicht werden.

Insbesondere ist es vorteilhaft, wenn die Ausnehmung die mindestens in einem Teilabschnitt der Umfangsform des Gelenkbolzens angepasst ist.

In einer weiteren bevorzugten Ausführungsform bilden in der Serviceposition des Gelenkteils mindestens ein Teilbereich des Gelenkbolzens und der Ausnehmung Formschluss. Dieses bewirkt, dass die Hebelverhältnisse im Wischarm positiv beeinflusst werden und sich die Kräfte im Gelenkteil besser verteilen. Die maximal tolerierbaren Misuse-Kräfte steigen dadurch erheblich, ohne dass hierdurch der Materialeinsatz gesteigert oder die Bauhöhe des Gelenkteils geändert werden muss.

Vorteilhaft ist auch, dass das Federelement derart angeordnet ist, dass bei Ausbildung des Formschlusses zwischen mindestens einem Teilbereich des Gelenkbolzens und der Ausnehmung das Federelement nicht in Kraftfluss steht. Hierdurch wird erreicht, dass das Federelement in der Serviceposition sogar aus deren Halterung gelöst werden kann, ohne dass dabei das Gelenkteil aus dem Wischarmgelenk gleitet.

Der Gelenkbolzen kann verschiedene Querschnittsformen aufweisen. Insofern mehrere Gelenkbolzen eingerichtet sind, können auch diese in ihrer Querschnittsform voneinander variieren. So kann der Gelenkbolzen einen kreisförmigen Querschnitt aufweisen. Auch ist beansprucht, dass der Gelenkbolzen einen ovalen Querschnitt aufweisen kann.

Zum Erreichen einer definierten Serviceposition und/oder Arbeitsposition ist es vorteilhaft, wenn am Befestigungsteil wenigstens ein Anschlag zur Begrenzung der Schwenkbewegung des Gelenkteils gegenüber dem Befestigungsteil eingerichtet ist, die mit dem oder den Schenkeln der im Wesentlichen u-förmigen Lageröffnung zusammenwirken.

Nachfolgend wird die Erfindung anhand der Figuren näher erläutert.

Die Figuren zeigen:
- Fig. 1:: Wischarm in Serviceposition,
- Fig. 2:: Detaildarstellung des Wischarmgelenkes, Wischarm in Serviceposition,
- Fig. 3:: Wischarm in Arbeitsposition,
- Fig. 4:: Detaildarstellung des Wischarmgelenkes, Wischarm in Arbeitsposition.

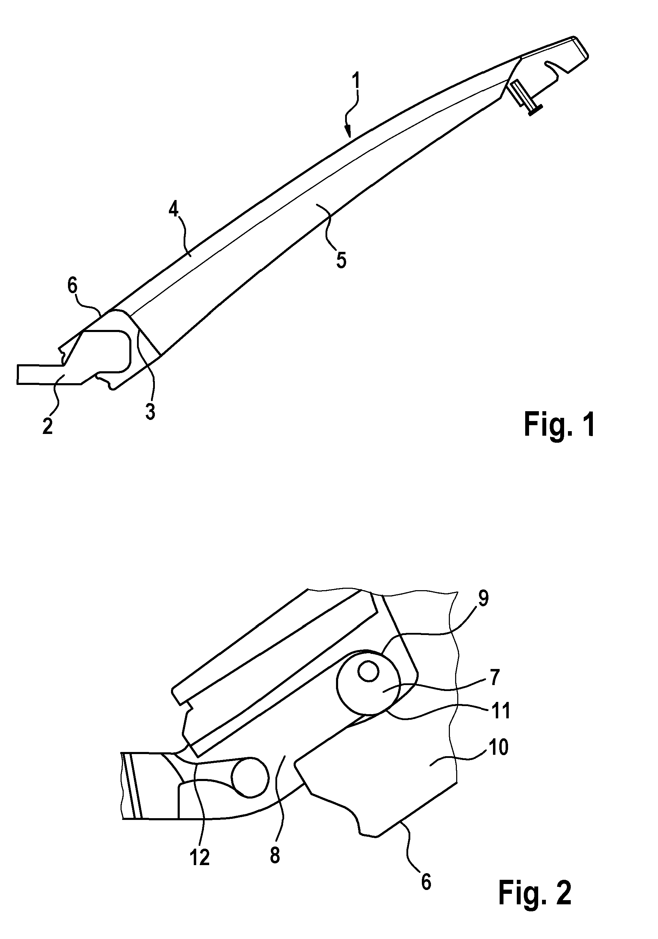

Die Figur 1 zeigt in einer Seitenansicht einen erfindungsgemäßen Wischarm in der Serviceposition. Dieser besteht im Wesentlichen aus einem Gelenkteil 1, das an einem Ende mit einem Befestigungsteil 2 drehbeweglich verbunden ist und sich gegenüber dem Befestigungsteil 2 in abgeklappter Stellung befindet. Zwischen dem Gelenkteil 1 und dem Befestigungselement 2 ist ein Federelement (nicht dargestellt) angeordnet. Das Gelenkteil 1 ist im Querschnitt im Wesentlichen U-Profil 3 ausgebildet, bestehend aus einem Rücken 4 und zwei Seitenwangen 5 und 6. Das Gelenkteil 1 umgreift das Befestigungsteil 2 teilweise.

Die Figur 2 zeigt in einer Seitenansicht das Wischarmgelenk eines erfindungsgemäßen Wischarms in der Serviceposition. In einer Seitenwange 6 des Gelenkteils 1 ist eine Lageröffnung 8 zur Aufnahme eines Gelenkbolzens 7, welcher am Befestigungsteil 2 angebracht ist, eingerichtet. Mittels der Federkraft des Federelements (nicht gezeigt) ist der Gelenkbolzen 7 im Lagerbereich 9 der Lageröffnung 8 gesichert.

Die im Wesentlichen u-förmige Lageröffnung 8 verläuft ausgehend von der Stirnseite des gelenkseitigen Endes des Gelenkteils 1 in Richtung des wischblattseitigen Endes des Gelenkteils 1 unter Ausbildung zweier, die im Wesentlichen u-förmige Lageröffnung begrenzenden Schenkel. Im unteren Schenkel 10 der Lageröffnung 8 befindet sich im Lagerbereich 9 eine nach außen weisende Ausnehmung 11. Durch die auf das Gelenkteil 1 zum Erreichen der Serviceposition ausgeübte Kraft wird der Gelenkbolzen 7 in die Ausnehmung 11 gedrückt. Die Ausnehmung 11 und ein Teilumfang des Gelenkbolzens 7 bilden Formschluss. In dieser Position steht die Feder des Federelementes nicht im Kraftfluss.

Zur Begrenzung der Schwenkbewegung zwischen Gelenkteil 1 und Befestigungsteil 2 ist am Befestigungsteil 2 ein Anschlag 12 eingerichtet. In dieser Position wirkt der obere Schenkel der im Wesentlichen u-förmigen Lageröffnung 8 mit dem Anschlag 12 zusammen, wodurch eine definierte Serviceposition des Wischarms gehalten wird.

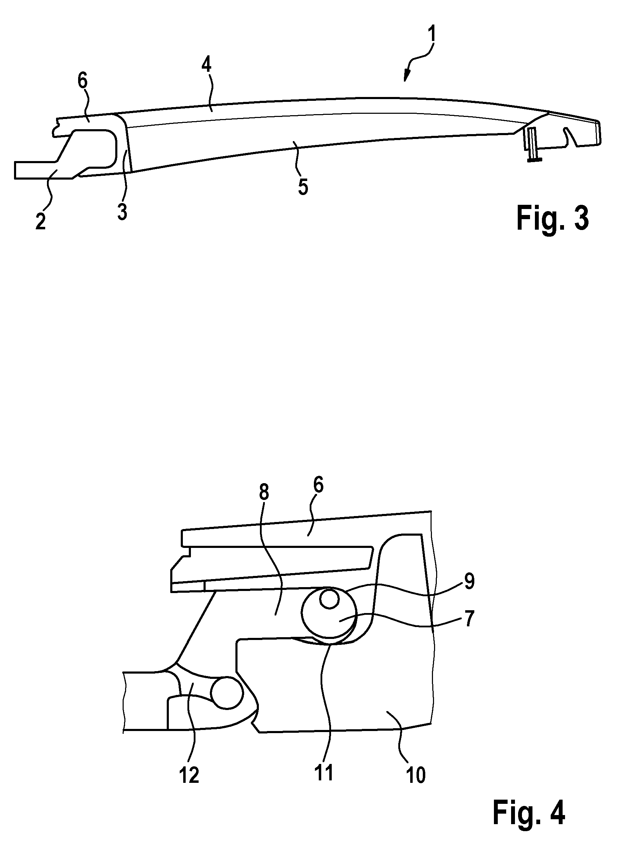

Die Figur 3 zeigt in einer Seitenansicht den erfindungsgemäßen Wischarm in der Arbeitsposition mit einem Gelenkteil 1, das an einem Ende mit einem Befestigungsteil 2 drehbeweglich verbunden ist und sich gegenüber dem Befestigungsteil 2 in angeklappter Stellung befindet.

Die Figur 4 zeigt in einer Seitenansicht das Wischarmgelenk des erfindungsgemäßen Wischarms in der Arbeitsposition. Der Gelenkbolzen 7 ist mittels der Federkraft des Federelements (nicht gezeigt) im Lagerbereich 9 der Lageröffnung 8 gesichert.

Die nach außen weisende Ausnehmung 11 im unteren Schenkel 10 der Lageröffnung 8 ist frei. Der Gelenkbolzen 7 steht nur mit dem Lagerbereich 9 in Kontakt. Die Feder des Federelementes befindet sich in der Arbeitsposition des Wischarms im Kraftfluss.

## Patentansprüche

1. Wischarm, insbesondere für eine Scheibenwischvorrichtung eines Kraftfahrzeugs, mit einem Gelenkteil (1), das an einem Ende mit einem Befestigungsteil (2) drehbeweglich verbunden ist, und mit wenigstens einem zwischen dem Gelenkteil (1) und dem Befestigungselement (2) wirkenden Federelement, wobei das Gelenkteil (1) gegenüber dem Befestigungsteil (2) aus einer Arbeitsposition in eine Serviceposition und umgekehrt verschwenkbar ist,
wobei das Gelenkteil (1) als ein im Wesentlichen u-förmiges Profil (3) ausgebildet ist, welches aus einem Rücken (4) und zwei Seitenwangen (5, 6) besteht und das Befestigungsteil (2) zumindest teilweise umgreift,
wobei das Befestigungsteil (2) wenigstens einen Gelenkbolzen (7) aufweist,
wobei mindestens in einer Seitenwange (5, 6) des Gelenkteils (1) eine Lageröffnung (8) zur Aufnahme eines Gelenkbolzens (7) eingerichtet ist,
wobei mittels der Federkraft des Federelements der Gelenkbolzen (7) in einem Lagerbereich (9) der Lageröffnung (8) gesichert ist,
wobei
die Lageröffnung (8) im Wesentlichen U-förmig ausgebildet ist , **dadurch gekennzeichnet, dass** die Lageröffnung (19) im unteren Schenkel (10) des Lagerbereichs (9) eine nach außen weisende Ausnehmung (11) aufweist.

2. Wischarm nach Anspruch 1, **dadurch gekennzeichnet, dass**
der Gelenkbolzen (7) durch Ausführen einer, vorzugsweise manuell geführten, Schwenkbewegung aus der Arbeitsposition in die Serviceposition in der Ausnehmung (11) arretierbar ist.

3. Wischarm nach Anspruch 1 oder 2, **dadurch gekennzeichnet, dass**
die Ausnehmung (11) mindestens in einem Teilabschnitt der Umfangsform des Gelenkbolzens (7) angepasst ist.

4. Wischarm nach Anspruch 3, **dadurch gekennzeichnet, dass**
in der Serviceposition des Gelenkteils (1) mindestens ein Teilbereich des Gelenkbolzens (7) und der Ausnehmung (11) Formschluss bilden.

5. Wischarm nach Anspruch 4, **dadurch gekennzeichnet, dass**
das Federelement derart angeordnet ist, dass bei Ausbildung des Formschlusses zwischen mindestens einem Teilbereich des Gelenkbolzens (7) und der Ausnehmung (11) das Federelement nicht in Kraftfluss steht.

6. Wischarm nach einem der Ansprüche 1 bis 5, **dadurch gekennzeichnet, dass**
der wenigstens eine Gelenkbolzen (7) einen kreisförmigen Querschnitt aufweist.

7. Wischarm nach einem der Ansprüche 1 bis 5, **dadurch gekennzeichnet, dass**
der wenigstens eine Gelenkbolzen (7) einen ovalen Querschnitt aufweist.

8. Wischarm nach einem der Ansprüche 1 bis 7, **dadurch gekennzeichnet, dass**
am Befestigungsteil (2) wenigstens ein Anschlag (12) zur Begrenzung der Schwenkbewegung des Gelenkteils (1) gegenüber dem Befestigungsteil (2) angeordnet ist.

## Claims

1. Wiper arm, in particular for a window wiper device of a motor vehicle, with a hinge part (1) which is connected rotatably at one end to a fastening part (2), and with at least one spring element acting between the hinge part (1) and the fastening element (2), wherein the hinge part (1) is pivotable in relation to the fastening part (2) from a working position into a service position and vice versa, wherein the hinge part (1) is designed as a substantially U-shaped profile (3) which consists of a back (4) and two side members (5, 6) and at least partially engages around the fastening part (2), wherein the fastening part (2) has at least one hinge pin (7), wherein a bearing opening (8) for receiving a hinge pin (7) is provided at least in one side member (5, 6) of the hinge part (1), wherein the hinge pin (7) is secured in a bearing region (9) of the bearing opening (8) by means of the spring force of the spring element, wherein the bearing opening (8) is of substantially U-shaped design, **characterized in that** the bearing opening (19) in the lower limb (10) of the bearing region (9) has an outwardly facing recess (11).

2. Wiper arm according to Claim 1, **characterized in that** the hinge pin (7) is lockable in the recess (11) by execution of a, preferably manually guided, pivoting movement from the working position into the service position.

3. Wiper arm according to Claim 1 or 2, **characterized in that** the recess (11) is adapted, at least in a partial section, to the circumferential shape of the hinge pin (7).

4. Wiper arm according to Claim 3, **characterized in that** at least a partial region of the hinge pin (7) and the recess (11) form an interlocking connection in the service position of the hinge part (1).

5. Wiper arm according to Claim 4, **characterized in that** the spring element is arranged in such a manner that the spring element is not in the force flux when the interlocking connection is formed between at least one partial region of the hinge pin (7) and the recess (11).

6. Wiper arm according to one of Claims 1 to 5, **characterized in that** the at least one hinge pin (7) has a circular cross section.

7. Wiper arm according to one of Claims 1 to 5, **characterized in that** the at least one hinge pin (7) has an oval cross section.

8. Wiper arm according to one of Claims 1 to 7, **characterized in that** at least one stop (12) for limiting the pivoting movement of the hinge part (1) in relation to the fastening part (2) is arranged on the fastening part (2).

## Revendications

1. Bras d'essuie-glace, en particulier pour un dispositif d'essuie-glace d'un véhicule automobile, comprenant une partie d'articulation (1) qui est connectée de manière mobile en rotation au niveau d'une extrémité à une partie de fixation (2), et comprenant au moins un élément de ressort agissant entre la partie d'articulation (1) et l'élément de fixation (2), la partie d'articulation (1) pouvant pivoter par rapport à la partie de fixation (2) d'une position de travail dans une position de service et inversement,
la partie d'articulation (1) étant réalisée sous forme de profilé essentiellement en forme de U (3) qui se compose d'une âme (4) et de deux bandes latérales (5, 6) et qui vient en prise au moins en partie autour de la partie de fixation (2),
la partie de fixation (2) présentant au moins un boulon d'articulation (7),
au moins dans une bande latérale (5, 6) de la partie d'articulation (1) étant prévue une ouverture de palier (8) pour recevoir un boulon d'articulation (7),
le boulon d'articulation (7) étant fixé au moyen de la force de ressort de l'élément de ressort dans une région de palier (9) de l'ouverture de palier (8),
l'ouverture de palier (8) étant réalisée essentiellement en forme de U, **caractérisé en ce que** l'ouverture de palier (19) présente dans la branche inférieure (10) de la région de palier (9) un évidement (11) orienté vers l'extérieur.

2. Bras d'essuie-glace selon la revendication 1, **caractérisé en ce que**
le boulon d'articulation (7) peut être bloqué en effectuant un mouvement de pivotement, de préférence guidé manuellement, de la position de travail dans la position de service dans l'évidement (11).

3. Bras d'essuie-glace selon la revendication 1 ou 2, **caractérisé en ce que** l'évidement (11) est adapté au moins dans une portion partielle à la forme périphérique du boulon d'articulation (7).

4. Bras d'essuie-glace selon la revendication 3, **caractérisé en ce que**
dans la position de service de la partie d'articulation (1), au moins une région partielle du boulon d'articulation (7) et l'évidement (11) forment un engagement par coopération de forme.

5. Bras d'essuie-glace selon la revendication 4, **caractérisé en ce que**
l'élément de ressort est disposé de telle sorte que lors de la réalisation de l'engagement par correspondance de forme entre au moins une région partielle du boulon d'articulation (7) et l'évidement (11), l'élément de ressort ne soit pas engagé par force.

6. Bras d'essuie-glace selon l'une quelconque des revendications 1 à 5, **caractérisé en ce que** l'au moins un boulon d'articulation (7) présente une section transversale circulaire.

7. Bras d'essuie-glace selon l'une quelconque des revendications 1 à 5, **caractérisé en ce que** l'au moins un boulon d'articulation (7) présente une section transversale ovale.

8. Bras d'essuie-glace selon l'une quelconque des revendications 1 à 7, **caractérisé en ce qu'**au moins une butée (12) est disposée au niveau de la partie de fixation (2) pour limiter le mouvement de pivotement de la partie d'articulation (1) par rapport à la partie de fixation (2).
